# EUROPEAN PATENT APPLICATION

(11) **EP 1 203 905 A2**
(43) Date of publication of application: **08.05.2002**
(21) Application number: 01309285.3
(22) Date of filing: 01.11.2001
(51) Int. Cl.: F16J 15/32

(54) **Brush seal device**

(30) Priority: 01.11.2000 JP 2000334438
(71) Applicant: Eagle Engineering Aerospace Co., Ltd., Minato-ku, Tokyo 105-8587 (JP)
(72) Inventor: Kono, Toro, c/o Eagle Engineering Aerospace Co.Ltd, Sakado-shi, Saitama 350-0285 (JP)
(74) Representative: Feakins, Graham Allan

(57) **Abstract**

A brush seal device for sealing a gap of varying dimensions between two parts moving relatively, has a brush (2) formed by a number of thin bristles (3) arranged in a wall-like form, one end secured to one part in parallel with a retaining portion (4) that supports the brush (2), and a seal portion at the other end facing the other part for sealing the gap. When the dimensions of the gap change and an inner diameter edge portion of the seal portion contacts the other part, a lubricant (7, 8) interposed between each contact surface of the brush (2) and/or the retaining portion (4) makes a friction coefficient of the contact surface of the brush (2) small, so as to facilitate deflection of the brush (2) when the other part contacts the brush (2).

## Description

### Technical Field

The present invention relates to a brush seal device for sealing between two parts that move relative to each other (such as rotational movement and reciprocating movement), and more particularly to a brush seal device for sealing between two parts using a brush.

### Background Art

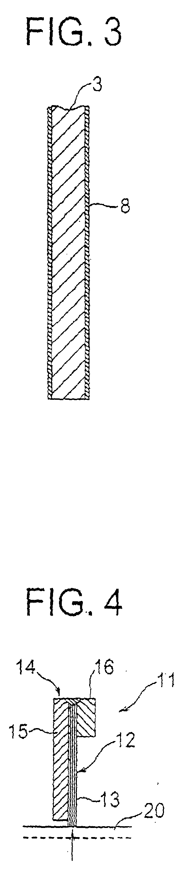

There are various types of seal devices according to conventional arts that seal between two parts that move relative to each other (such as rotational movement and reciprocating movement). For example, a brush seal device shown in Figs. 4 to 8 is generally known.

A brush seal device 11 comprises a brush 12 formed by bundling a plurality of thin bristles 13 made of highly rigid material such as metal, synthetic resin, ceramics, or composite material, and a retaining member 14 which consists of a back plate 15 and a side plate 16 to retain the brush 12.

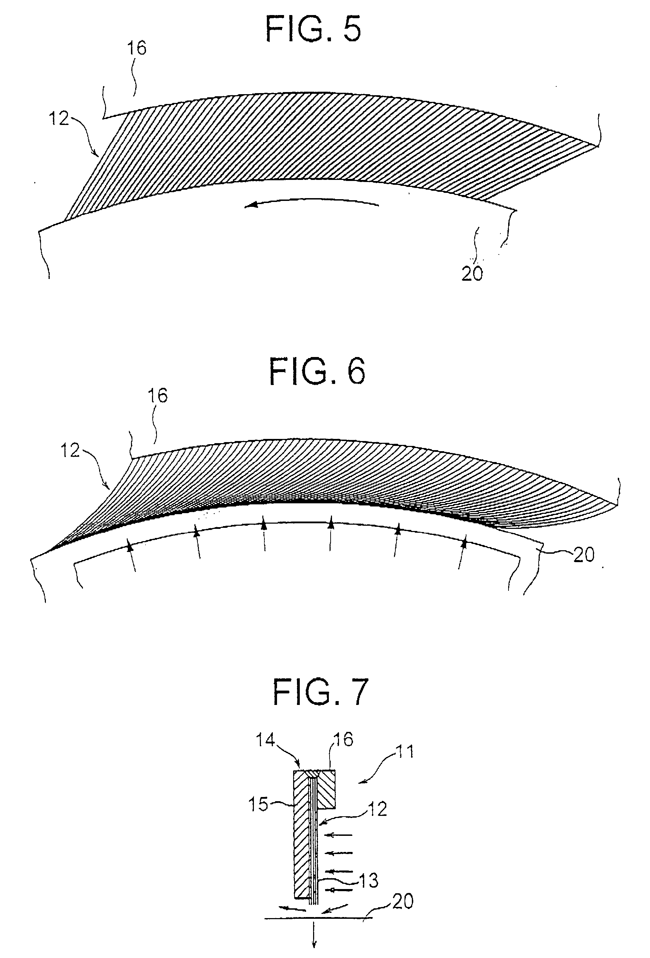

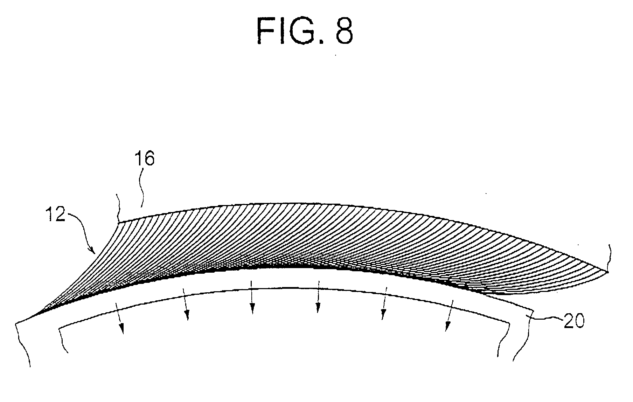

The retaining member 14 is secured to one part (fixed body not shown in the drawing) of two parts that move relative to each other (e.g. rotational movement), and, in this secured state, the tip portion of the brush 12 is brought into contact with the other part (rotational body) 20. Alternatively, creation of a small gap between the tip portion of the brush 12 and the other part 20 permits sealing a gap between two parts that move relative to each other (refer to Figs. 7 and 8).

When the other part 20 becomes off-centered by rotation or deforms by a rotational force or a change occurs in a gap created by a relative dimensional difference between one part (fixed body) and the other part 20 due to a difference in thermal expansion coefficients of the two parts, the entire brush 12, in accordance with the movement of the other part 20, deflects in a radial direction reducing a contact force, and therefore wear of the tip portion of the brush 12 is reduced and leakage of sealed fluid is prevented.

However, with respect to the brush seal device 11 as configured as above, when the other part 20 becomes off-centered or deforms by the rotational force or a change occurs in the gap created by a relative dimensional difference between one part (fixed body) and the other part 20 due to a difference in thermal expansion coefficients of the two parts and the like, if the brush 12 is firmly pressed against the back plate 15 side by a pressure differential between the pressures at the upstream side and downstream side, when the other part 20 is pressed, a friction resistance between the back plate 15 and the brush 12 and a friction resistance between the thin bristles 13 of the brush 12 inhibit the brush 12 from deflecting and escaping in a radial direction, thereby causing wear on the tip portion of the brush 12 (refer to Fig. 6).

To the contrary, if the brush 12 is retained by the back plate 15 side in a deflected state due to the friction resistance between the back plate 15 and the brush 12 and the friction resistance between the thin bristles 13 of the brush 12 when the expansion or eccentricity of the other part 20 is conversely reduced, it is difficult for the brush 12 to return to its original state from the deflected state. As a result, the gap between the tip portion of the brush 12 and the other part 20 increases, thereby causing an increase of leakage (refer to Figs. 7 and 8).

The present invention solves the foregoing problems. A brush seal device according to this invention prevents wear of the tip portion of the brush by enabling the brush to deform smoothly in a radial direction in accordance with the movement of the other part, when the other part becomes off-centered or deforms by a rotational force thereof or a change occurs in a gap created by a relative dimensional difference between one part (fixed body) and the other part due to a difference in thermal expansion coefficients of the two parts.

Furthermore, the brush seal device according to this invention enables the brush to smoothly return to its original state from the deflected state when the expansion of the other part or the eccentricity thereof by rotation are reduced, and thus prevents an increase in the gap between the tip portion of the brush and the other part which causes an increase of sealed fluid leakage.

### Disclosure of the Invention

This invention relates to a brush seal device in which an attachment portion at one end is retained by one of two parts that move relatively and a seal portion at the other end faces the other part for sealing. The brush seal device further comprises a brush provided with a seal portion that divides between the two parts by arranging a plurality of thin bristles in a wall-like form, and a retaining portion which retains the attachment portion at one end of the brush and has a support surface which is arranged in parallel with the brush and supports the seal portion relative to a direction of action of the sealed fluid, wherein at least one of the thin bristles of the seal portion and the support surface is provided with a lubricant.

According to this invention, with the foregoing configuration, even if the brush is pressed against the retaining portion side by a pressure differential between the pressures at the upstream side and downstream side when the other part is rotated eccentrically or deformed elastically by the rotational force thereof, or a change occurs in the gap created by a relative dimensional difference between one part (rotational body) and the other part due to a difference in thermal expansion coefficients of the two parts, since the lubricant is provided for at least one of a contact surface between the retaining portion and the brush and a surface of each thin bristle of the brush, a friction resistance between the retaining portion and the brush or a friction resistance between the retaining portion and the brush and a friction resistance between the thin bristles of the brush become extremely small. Therefore, such a state does not occur where the brush is pressed against the retaining portion side and does not move, and the brush is able to deflect smoothly in accordance with the movement of the other part and return to its original state from the deflected state.

Also, the lubricant is applied in a form of liquid such as grease.

Application of the liquid lubricant to only the retaining portion or the brush causes the lubricant to contact and adhere to an opposing mating part and exert a further lubrication effect on all contact surfaces. Consequently, the lubricant can be interposed between all contact surfaces, enabling the friction resistance to be reduced.

In addition, the lubricant is adhered in a form of a solid such as fluoride resin, molybdenum disulfide, tungsten disulfide, and boron nitride. Because of this, the solid lubricant can be interposed between the contact surfaces over a long period of time by means of adhesion to exert the lubrication effect.

Further, the brush is installed inclined and includes the liquid lubricant.

When the liquid lubricant is interposed in the inclined brush, the liquid lubricant permeates into and is distributed over the surface of the other part to be contacted. This enables the angle of inclination or the brush to enlarge easily even when one part is pressed against the brush, and thereby the contact force is reduced to reduce the friction resistance, thus effectively preventing wear of the brush and the other part.

### Brief Description of the Drawings

Fig. 1 is a sectional view of a preferred brush seal device according to the invention;
Fig. 2 is a fragmentary enlarged view of the brush seal device shown in Fig. 1;
Fig. 3 is a fragmentary sectional view of a thin bristle according to a second embodiment of the invention;
Fig. 4 is a sectional view of a conventional example of a brush seal device, which shows a positional relationship of the brush and the other part when the other part is located at a normal position;
Fig. 5 is a fragmentary side view of Fig. 4;
Fig. 6 is a side view showing positions of the brush and the other part when the other part becomes off-centered while rotating or deforms by a rotational force thereof, or a change occurs in a gap created by a relative dimensional difference between one part and the other part due to a difference in thermal expansion coefficients of the two parts and the like;
Fig. 7 is a sectional view showing a positional relationship of the brush and the other part when deformation of the other part by the rotational force or eccentricity of the other part is reduced; and
Fig. 8 is a fragmentary side view of Fig. 7.

### Best Mode for Carrying Out the Invention

Hereinafter, the present invention will be explained in detail referring to drawings of the embodiments.

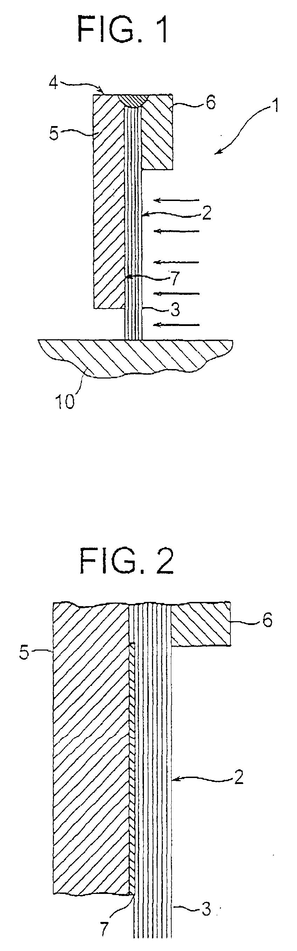

Figs. 1 and 2 show a first embodiment of a brush seal device according to the invention. The brush seal device 1 comprises a brush 2 and a retaining portion 4 for clamping the brush 2.

The brush 2 is formed by bundling, in a wall-like form, a plurality of thin bristles 3 made of highly rigid material such as metal, synthetic resin, ceramics, or composite material. The brush 2 is formed in a shape appropriate for a location to be sealed, which is in an annular, semi-annular, or plate-like (e.g. rectangular) shape, etc. In the first embodiment, the brush 2 is formed in an annular shape since the sealing location lies between two parts that make relative rotational movement. Also, an inner periphery side other than an attachment portion of an outer periphery of the brush 2 corresponds to a seal portion.

The retaining portion 4 is formed in an annular, semi-annular, or plate-like shape, etc., since the retaining portion 4 is formed in a shape for retaining the brush 2 with respect to sealed fluid. In the first embodiment, the retaining portion 4 is formed in an annular shape just like the brush 2 since the sealing location lies between two parts that move relatively.

The retaining portion 4 comprises an annular back plate 5 and an annular side plate 6 which is integrally fitted to one side of the back plate 5 by connecting means such as welding and bolts. Furthermore, an outer diameter of the back plate 5 and that of the side plate 6 are almost identical, but an inner diameter of the back plate 5 is formed smaller than that of the side plate 6.

In addition, the brush 2 is clamped between the back plate 5 and the side plate 6. The brush 2, while one side thereof faces one side of the back plate 5, has a portion closer to the outer diameter clamped between the back plate 5 and the side plate 6. An outer diameter edge portion of the brush 2 is connected integrally with the outer peripheral portions of the back plate 5 and the side plate 6 by welding and the like. Also, the inner peripheral surface of the brush 2 is formed with a small diameter whose length is longer than the inner peripheral surface of the back plate 5 by a specified length.

A lubricant 7 is provided on a contact surface of the back plate 5 (excluding the surface facing the side plate 6) with the brush 2. Grease, fluoride resin, molybdenum sulfide, tungsten sulfide, boron nitride, and the like are effective for the lubricant 7, however, the lubricant 7 is not limited to these specific lubricants and another type of known lubricant 7 may be used.

Methods for adhering the lubricant 7 include application coating (brush coating, tipping, etc.), plating, thermal spraying, sputtering, and the like. The adhering method may be selected according to a type of the lubricant 7 and environmental conditions.

In the first embodiment configured as above, the retaining portion 4 of the brush seal device 1 is secured to one part (fixed body not shown in the drawing) of two parts that move relative to each other (e.g. rotational movement), and an inner diameter edge portion of the brush 2 is engaged to and brought into contact with the other part 10 (rotational body). This contact is such that a small gap may be created between the inner diameter edge portion of the thin bristles 3 of the brush 2 and the other part 10 as necessary and the space between the two parts that move relative to each other can be sealed.

Also, when the other part 10 becomes off-centered while rotating or deforms by the rotational force, or, in addition, when a change occurs in the gap created by a relative dimensional difference between one part (rotational body) and the other part 10, the brush 2 is pressurized by the other part 10 and thus the entire brush 2 deflects and escape in a radial direction.

In this condition, the brush 2 is pressed against the back plate 5 of the retaining portion 4 by a pressure differential between the pressures at the upstream side and the downstream side. However, since the lubricant 7 is provided on the contact surface of the back plate 5 with the brush 2, the friction resistance between the brush 2 and the back plate 5 becomes extremely small. As a result, the brush 2, even when pressed against the back plate 5, can deflect and escape in a radial direction. Therefore, the brush 2 can escape by deflecting smoothly in accordance with the movement of the other part 10, and wear of the inner diameter edge portion of the brush 2 is prevented.

Furthermore, since the lubricant makes the friction resistance between the brush 2 and the back plate 5 small, when deformation or eccentricity of the other part 10 is reduced, the brush 2 is not retained by the back plate 5 in a deflected state and can smoothly return to its original state from the deflected state. Consequently, the gap between the inner diameter edge portion of the brush 2 and the other part 10 does not increase, and thus leakage of sealed fluid is effectively prevented.

Also, the lubricant 7 (not shown in the drawing) may be provided on a surface of the back plate 5 facing the side plate 6, and this further effectively prevents the brush 2 from being retained by the back plate 5.

Fig. 3 discloses a brush seal device according to a second embodiment of the invention. The brush seal device 1 has a lubricant 8 provided on a surface of each thin bristle 3 of the brush 2, and the other construction is the same as that in the first embodiment.

Also with the brush seal device 1 according to the second embodiment, when the other part 10 becomes off-centered or deforms by rotation or when a change occurs in the dimensions of the gap created between one part (fixed body) and the other part 10 due to a difference in thermal expansion ccefficients of the two parts, the brush 2 is pressurized by the other part 10, however, the entire brush 2 can deflect and escape in a radial direction.

In such a case, although the brush 2 is pressed against the back plate 5 of the retaining portion 4 by a pressure differential between the pressures at the upstream side and the downstream side, the lubricant a provided on the surface of each thin bristle 3 of the brush 2 makes the friction resistance between the brush 2 and the back plate 5 and the friction resistance between respective thin bristles 3 extremely small. Accordingly, even when the brush 2 is held pressed against the back plate 5, the brush 2 can deflect and escape in a radial direction, and thus the brush 2 can escape by deflecting smoothly in a radial direction in accordance with the movement of the other part 10, enabling the effective prevention of wear of the inner diameter edge portion of the brush 2.

Also, when deformation or rotational eccentricity of the other part 10 is reduced, since the friction resistance between the brush 2 and the back plate 5 and the friction resistance between respective thin bristles 3 are extremely small, the brush 2 is not retained by the back plate 5 side in the deflected state, and thereby the brush 2 can smoothly return to its original state from the deflected state. As a result, the gap between the inner diameter edge portion of the brush 2 and the other part 10 does not increase, and leakage of sealed fluid can be effectively prevented.

Although the lubricant 7 is provided on the contact surface of the back plate 5 with the brush 2 in the first embodiment and the lubricant 8 is provided on the surface of each thin bristle 3 of the brush in the second embodiment, the lubricant may be provided on both the contact surface of the back plate 5 with the brush 2 and the surface of each thin bristle 3 of the brush 2. This further effectively prevents the brush 2 from being retained by the back plate 5.

Having described specific embodiments of the invention, however, the descriptions of these embodiments do not cover the whole scope of the present invention nor do they limit the invention to the aspects disclosed herein, and therefore it is apparent that various changes or modifications may be made from these embodiments. The technical scope of the invention is specified by the claims.

### Industrial Applicability

As stated above, the brush seal device according to the present invention is appropriate for sealing a gap between portions of two parts in a gas turbine, steam turbine, and the like, wherein the portions are those whose thermal expansion coefficients according to temperature differ, or portions which vibrate due to rotation, or portions which move relative to each other. Particularly, the brush seal device is suitable as a seal used in portions where the dimensions of the gap between two parts change.

## Claims

1. A brush seal device in which an attachment portion at one end is retained by one of two parts that move relatively and a seal portion at the other end faces the other part for sealing, **characterized by** comprising:
a brush (2) provided with a seal portion dividing between the two parts by arranging a plurality of thin bristles (3) in a wall-like form, and a retaining portion (4) which retains the attachment portion at one end of the brush (2) and is disposed in parallel with the brush (2) to support the seal portion relative to a direction of action of sealed fluid, wherein a lubricant (7, 8) is provided on at least one of a contact surface of the thin bristle (3) of the seal portion and a contact surface of the retaining portion (4).

2. The brush seal device according to claim 1, **characterized in that**:
the lubricant (7, 8) is a liquid lubricant such as grease.

3. The brush seal device according to claim 1, **characterized in that**:
the lubricant (7, 8) is a solid lubricant such as fluoride resin, molybdenum disulfide, tungsten disulfide, and boron nitride.

4. The brush seal device according to claim 1, **characterized in that**:
the brush (2) is inclined with respect to a direction of the other part and the lubricant (7, 8) is a liquid lubricant.
